Europäisches Patentamt

European Patent Office

Office européen des brevets

(11) Publication number: **0 269 588**
**A2**

(12) # EUROPEAN PATENT APPLICATION

(21) Application number: **87850306.9**

(51) Int. Cl.⁴: **H 02 G 1/00**

(22) Date of filing: **14.10.87**

(30) Priority: **25.11.86 SE 8605027**
**20.01.87 SE 8700191**

(43) Date of publication of application:
**01.06.88 Bulletin 88/22**

(84) Designated Contracting States:
**AT BE CH DE FR GB IT LI NL SE**

(71) Applicant: **SMC STOCKHOLMS MASKINCENTRAL AKTIEBOLAG**
**Rosenlundsgatan 52**
**Stockholm (SE)**

(72) Inventor: **Akerberg, Jan**
**Rosenlundsgatan 52**
**Stockholm (SE)**

**Nilsson, Bo**
**Ekuddsvagen 4**
**Nacka (SE)**

(74) Representative: **Avellan-Hultman, Bengt**
**Hultmans Patentbyra Aktiebolag Jungfrugatan 16 P.O. Box 5165**
**Stockholm 5 (SE)**

(54) **Mitre cutter device for cable ditches.**

(57) The invention regards a mitre cutter arrangement for cable ditches comprising a mitre ruler (Fig 2) to be clamped to the cable ditch (Fig 9) in order to receive a saw arrangement (Figs 3 and 4) running along the mitre ruler, said saw arrangement when displaced being guided by guide means, one of which being applied on the saw arrangement and the other one, cooperating with said first mentioned guide means, being applied on the mitre ruler. The mitre ruler and the cable ditch are clamped to a mitre table, such that the cable ditch will form the desired angle with the longtudinal direction of the mitre table and the mitre ruler, respectively. In the bottom (10) of the mitre ruler a groove (12) is provided for receiving the saw blad (17) of the sawing arrangement, said saw blade running through the groove and into the cable ditch, which is clamped under the mitre ruler.

FIG. 3

EP 0 269 588 A2

**Description**

Mitre cutter device for cable ditches

It often happens that in buildings, especially factory or storebuildings but also in other localities such as work shops, laboratories, stores and the like, the exisiting electric conduits are applied in elongated, three-sided channels, so called cable ditches, made from metal, plastic or the like. These cable ditches, usually, are thereby mounted with their open side turned upwardly hanging on hooks at the ceilings of the buildings but is also happens that they are provided close at the walls or beneath shelves, provided in the locality along its walls. Sometimes, the cable ditches are covered by means of a lid forming material but rather often they are left open without such lid forming material.

Dependent upon the room planning, it is usually impossible to provide the cable ditches fully linearly straight but they have, practically allways, to be mounted in bends or angles. Due to their construction, the cable ditches cannot be bent such as, for instance,electric conduit tubes, but the bends have to be imitated by means of a sequence of shorter pieces cut out from straight cable ditches, mutually connected by means of mitre joints with obtuse angles. This means, that leakage intimations will exist in a great number of places, through which moisture could penetrate into the cable ditches, resulting in short circuiting, or damages of the insulation of the electric conduits. Therefore, it is extremely important that the mitre joints are very tight, which requires a mitre cut of an extremly high quality. The ends of each cable ditch section in a mitre joint, with other words, must approach each other very well so that the joint between them is not visible or will be as little visible as possible.

A mitre cut is easily provided in a satisfactory way when the material is wood, such as is the case in the picture frame making but as the cable ditches are practically exclusively made from plastic or metal which cannot be sawed as nicely as wood, extremly good tools are required for mitre cutting in these materials. This depends upon that the sawing of metal is subjected to an essentially stronger resistance than sawing of wood, whereas sawing plastic will give rise to "suction" caused by the toughness proper of the plastic, both of these circumstances causing a tendency of the sawing means to "trow".

The difficulty in providing good mitre joints between parts of metal or plastic allready has been observed. For instance one may refer to the U. S. patent specification 4.327.619, in which this difficulty is especially mentioned. The U. S. patent specification also expresses the opinion that this depends upon oscillations of the saw blade, an opinion which has, at the tests forming basis of the present invention also been completely confirmed. Therefore, one tries, in the U. S. patent specification to minimize the tendency of such oscilllations by means of an arrangement, in which the saw means is carried up by a rectangular plate running in a furrow of rectangular cross section. The plate is carried up by means of cylindrical support rollers, which are resilently beared. This arrangement, however, has due to the inavoidable play between the edges of the plate and the side walls of the furrow, in combination with the resilient bearing of the plate, proved still to be dissatisfactory.

Here, thus, one will find a first problem, viz. the provision of the highest possible degree of accuracy at the mitre cutting.

The mitre cutting, as a rule, has to take place in the place of house erection and the mitre cutting arrangements, hitherto known which could be used for mitre cutting of cable ditches have been stationary and so large and heavy that they were not suitable for transportation from the storing place to the building place and still less for transportation within the building place.

Here, thus, one will find a second problem, viz. the provision of an arrangement for mitre cutting which is easily transportable and which should, therefore, consist in a combination of parts, which are easily separated and, again, easily combined, which can easily be transported each per se from the storing place to the building place as well as between different stations in the building place, still retaining the high accuracy of mitre cutting.

The present invention regards a mitre cutting arrangement, which will, at a high degree, satisfy both of the above mentioned requirements. It will give an exceedingly nice mitre cut with a very exact adaption of the mitre angle without visible or with only scarcely visible joints. It is also adjustable to different mitre angles. It is light and easi ly transportable and useable, and the transportation, therefore, can take place by simple means not only from the place of storing to the place of erection but also from different stations within the range of erection.

The mitre cutting arrangement according to the invention comprises the following parts, separable from each other but cooperating, viz.: a mitre table with borders provided to adapt to different widths of the cable ditches, clamps or other attachement means for attaching the cable ditch to the cable ditch mitre cutter table, a mitre cutter ruler to be placed, at the mitre cutting, over the cable ditch and thereby to be adjusted and fastened in the correct angle by means of clamps or similar means, and a mitre cutter saw which is provided with a rotational saw blade and which is, preferably, of the type driven by an electric motor.

The invention is based upon an investigation of the forces which may cause displacements of the saw blade. Thereby, it was found that they are composed of two different types of forces. Both of them act in such a direction, that they tend to put the level in an inclined direction, in which the saw blade rotates, one of them, however, such that the saw blade will assume a position, differing from the straight angle to the level of the working piece, whereas the other one will act to turn the saw blade to and fro between two rather undistinct end positions, so that an oscillating or wave formed movement of the saw blade will be created with the oscillatory of wave shaped mitre groove which will, in turn, form the mitre cut. Such uneven edges of the parts of the mitre joint cannot be accepted for the sake of security.

According to this part of the invention, the saw which is, thus, provided with a rotational saw blade is provided about in the same level as the upper part of the saw blade, with a support carrier on each side of the rotational level of the saw blade, and each of the support carriers carry, at their ends, downwardly bent parts which, in turn, carry up guide wheels. The guiding arrangement with which the guide wheels cooperate, comprises at least one upwardly directed, longitudinal flange of the mitre cutter ruler but, preferably, one such upwardly directed, longitudinal flange at each of the longitunal edges of the mitre ruler, and a groove arranged in the bottom of the mitre ruler for reception of the saw blade such that this will extend sufficiently far below the mitre ruler and through the groove to mesh into the working piece on which the mitre ruler is applied. The guide wheels extending downwardly from one wheel carrier are, in this arrangement, arranged to run on the even upper edge of the flange, arranged in an adapted distance from the saw blade, whereas the other one of the guide wheels depending from the wheel carrier are arranged to mesh into the groove in the bottom of the mitre ruler. In both cases, one guide wheel of each type runs in front of the saw blade, and another guide wheel of each type runs behind the saw blade in the direction of action of the mitre cutting.

By the guiding effect obtained by means of the last mentioned guide wheels, vibrational movements of the saw blade perpendicularily to its level will be prevented, said vibrational movements taking place about a substantially vertical axis, if the working piece is supposed to be positioned horizontally, and by the guiding effect obtained by means of the first mentioned guide wheels corresponding vibrations of the saw blade will be prevented, which would, under same conditions, take place about a horizontal axis.

The invention will be further described below in connection with a couple of embodiments shown in the drawings, but it is understood that the invention shall not be limited to these embodiments but that all different types of modifications may exist within the frame of the invention.

In the drawings, Fig 1 shows the mitre ruler from above, only the ends of it being shown. Fig 2 is a cross section through the mitre ruler. Fig 3 shows the saw along the saw drive motor and the gear box and the guide means belonging thereto. Fig 4 shows same arrangement perpendicularily to the longitudinal direction of the mitre ruler. Fig 5, in enlarged scale, shows a guide wheel engaging a groove in the mitre ruler, and Fig 6 shows the corresponding guide wheel, co-operating with a flange of the mitre ruler. Fig 7 shows the mitre cutter table in perspective and in a first embodiment, and Fig 8 shows a clamp which may be used both for attachement of the working piece to the mitre ruler and for attachment of the working piece to the mitre cutter table. Fig. 9, in parallel perspective reproduction, shows a short section of a cable ditch. Fig 10 shows a picture onto the crossward end of the mitre cutter table in a second embodiment of the invention described below, Fig 11 shows a picture onto the longitudinal side of the mitre table in same embodiment, and Fig 12 shows a picture from above of the corresponding end of the mitre ruler in same second embodiment of the invention. Fig 13, finally shows a picture from above of the corresponding end of the mitre ruler of same second embodiment of the invention.

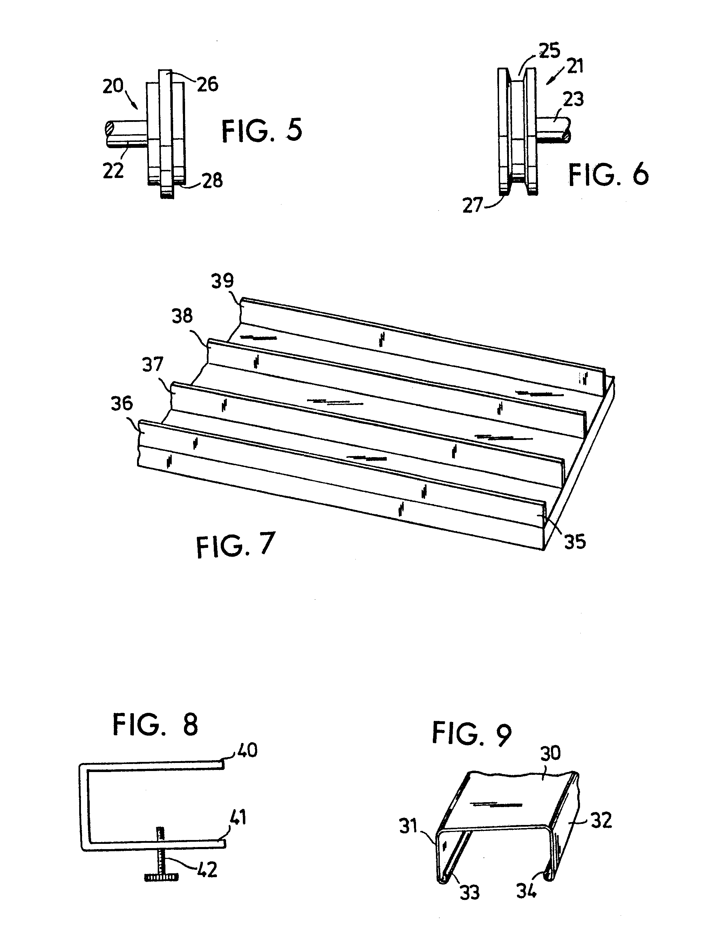

The cable ditch shown in Fig 9, thus comprises three sides, one of which 30 being turned downwardly in the mounted state of the ditch, and two sides 31 and 32, each of which connected per se to said side. At their free edges, the last mentioned sides 31 and 32 are usually provided with a rolled hem 33 and 34, respectively. These rolled hems have for their purpose to make possible the hanging up of the cable ditch at a ceiling or the like with the open side turned upwardly, thereby enclosing the electric conduits or cables. When providing a mitre joint between two sections of the material of the cable ditch, usally one section is placed at right angle over the other one, and, provided that a straight angle joint is desired, lines are marked by drawing or engraving on the angular parts of each of the cross sides 31 and 32 of the cable ditch to be formed. Guided by these markings, one may, thereafter, provide the corresponding angular marking on the upper side 30, which will, at the mounting of the cable ditch under a cealing, be its bottom side. Thereafter, the cable ditch is placed on the mitre cutter table, one cross side being placed tight to the outer side 35 of one of the parallel borders 36 - 39 and so on of the mitre cutter table. These borders, as to the mutual distances, are adapted to standardized dimensions of the cable ditches, so that the outer cross side 32 of the cable ditch will tightly attach the side of some other one of said borders 37, 38 and so on, directed further upwardly at right. Thereafter the cable ditch is clamped to the mitre cutter table, for instance by means of a clamp of the type shown in Fig 8 being applied with one arm 40 over the side 30 of the cable ditch and with the other arm 41 under the mitre table, said clamp thereafter being tightened by means of the screw 42.

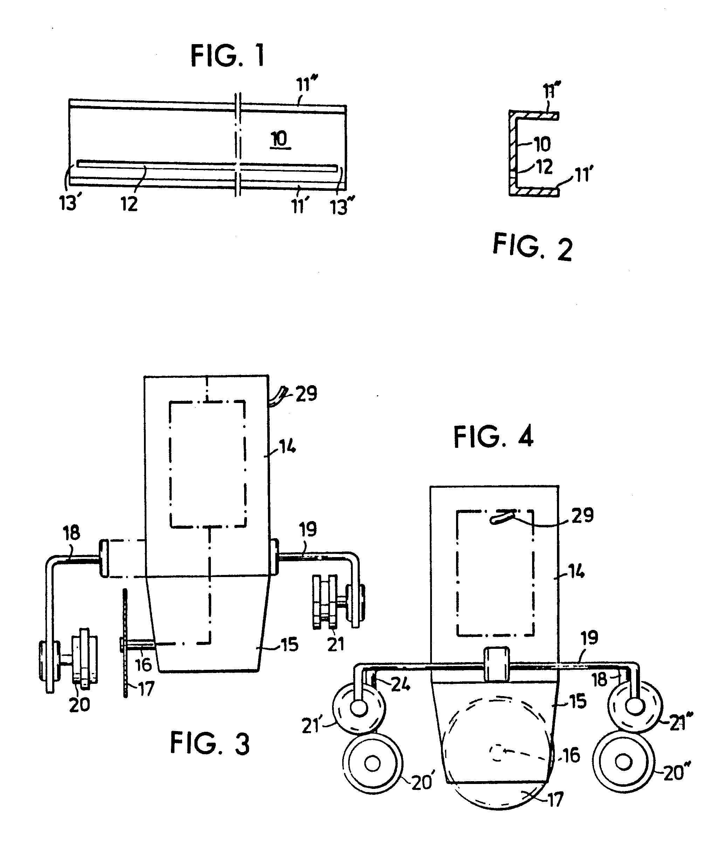

Hereafter, the mitre ruler, Fig 1 and 2, is placed over the cable ditch. The mitre ruler comprises a bottom 10 and, along each of the longitudinal sides, an extending flange 11, said flanges in the drawing being indicated by 11' and 11", as well as, close to one 11' of said flanges, a groove 12 extending along the major part of the length of the ruler through its bottom 10, a bridge 13 remaining at each end for stabilization of the construction of the ruler during the mitre cutting procedure. The ruler, thereafter, is placed in correct position over the cable ditch according to the engraving made and is clamped by suitable means, for instance clamps of same type as shown in Fig 8. The system, thereafter, is ready for making the mitre cut. This takes place by means of a saw, which is shown in Figs 3 - 6.

The saw comprises a motor casing 14, see Figs 3 and 4, in combination with a gear box 15 of such a type, that the rotational movement of the vertical motor shaft will be transferred into a rotational movement of the horizontal shaft carrying the saw blade, a change of the rotational movement speeds thereby if required taking place. The saw blade 17, thus, is carried up by the horizontal shaft 16 extending from the gear box.

Two guide wheel carriers 18 and 19, respectively, are attached to the motor casing 14 or to the gear box 15. For clarification of the description, the guidewheel carrier 18 has been shown separated from its place of attachement. In the embodiment proper, the two wheels 20 carried by said carrier, would in the drawing figure have been concealed by the saw blade 17, the arrangement thereby getting difficult to understand.

The wheels 20 are intended to run in the groove 12 when the apparatus is used for a mitre cutting procedure. The wheel carrier 19 also carries two guide wheels 21, which, when the apparatus is used, run on the straight upper edge of the flange 11″, see Figs 1 and 2.

One of the guide wheels 20 is shown in profile and in enlarged scale in Fig 5. The shaft 22 of said wheel, thus, is freely rotatable in the downwardly extending arm 24 of the wheel carrier 18 and carries up the wheel 20, which has a profile with an extending wheel ring 26 of rectangular or of parallel trapetzoidic section. In many a case, it is completely sufficient if the wheel ring has a rectangular profile, but in other cases the mounting and the combining of the different parts of the mitre cutter arrangement may be easier, if the wheel ring has the parallel trapetzoidic profile. The width of the rectangular profile or the base width of the parallel trapetzoidic profile should be well adapted for free run without unnecessary play in the groove 12, simultaneously as the wheel 20, with the major part of its circumference rolls on the edges of ruler bottom 10 at the groove 12. One of the wheels 20, thereby, will run in front of the saw blade 17 and the other one behind same.

One of the guide wheels 21 is shown in profile and in enlarged scale in Fig 6. This guide wheel is provided with a peripherial groove 25 in the otherwise smooth cylindrical mantle surface 27. The groove 25 as well as the wheel ring 26 may either have a rectangular cross section shape or a parallel trapetzoidic cross section shape, and the groove should be adapted to the width of the upper edge of the flange 11″, such as has been explained in connection with the wheel ring of the wheel 20. The shaft of the guide wheel shown in Fig 6 is indicated by 23. The carrier 18 as well as the carrier 19 each carries preferably two but in any case at least two such guide wheels, one of them running in front of the saw blade and the other one behind same.

When making a mitre cut with the arrangement now described, the saw device shown in Figs 3 - 6 is placed over the mitre ruler, the guide wheels 20 running in the groove 12 and the guide wheels 21 running on the upper edge of the flange 11″. Usually the weight proper of the sawing device will be sufficient to retain it in this position but, if the weight should perhaps not be sufficient it should by hand or in any other way be pressed downwardly. Thereby, it is important that the cylindrical part of the guide wheels are in continuous contact with the bottom of the mitre ruler.

The arrangement now descirbed may be further improved and be given a shape, which makes its use more easy without the mitre cut getting less accurate. Thereby, it has proved desirable to avoid the use of clamps. As a matter of fact, these have to be adapted as to their size to the shape and dimension of the cable ditch, and, therefore, you cannot, as a rule, use any deliberate clamps. As these clamps could also be used for other purposes, there is a risk that unauthorized persons will borrow them without replacing them. Further, it may happen that the clamps have to be adapted in such positions that they will prevent the movement of the saw blade. To this adds that the application of the clamps means a given work, which one would preferably avoid or, at least, simplify, which would be possible as the mitre angles in an overwhelming great number of cases possess a pre-determined magnitude, viz.: 30°, 45°, 60° or 90°, Therefore, it means an advantage if the fastening means are made in such a way that one will, by simple means, which are directly connected to the mitre table or the mitre ruler, respectively, in quick order adjust the mitre ruler in relation to the mitre table in the known, pre-determied angle, in which the cable ditch should be cut.

Thereby, the mitre table has such a large surface, that it will, along each long side, extend outside of the borders attached thereto, and in the outstanding ranges bolts or holes are provided for cooperation with holes or bolts, respectively, provided on the mitre ruler, all of which in such a way that, when the mitre ruler is placed over the mitre table in cooperation between given bolts or holes, respectively, the ruler will assume a position forming with the longitudinal direction of the mitre table a number of predetermined angles. The holes suitably are provided in a line after each other and the may even be interconnected in such a way that they form a continuous groove.

The mitre table 50, in this embodiment, is carried up by a number of beams 51 - 55, running in the crossward direction of the mitre table. Preferably, these beems are made as channel beams with their bases turned upwardly. On these upwardly turned bases the beams 51 - 55 carry a number of borders 56 - 60, which are preferably in the shape of angle beams with their flanges attached to the bases of the under lying beams 51 - 55, e.g. by means of welding. In the drawing, these borders 56 - 60 have been shown purely schematically and in different mutual distances, but in the practice they should, as to their positions, be adapted to standardized measures and dimentions of cable ditches.

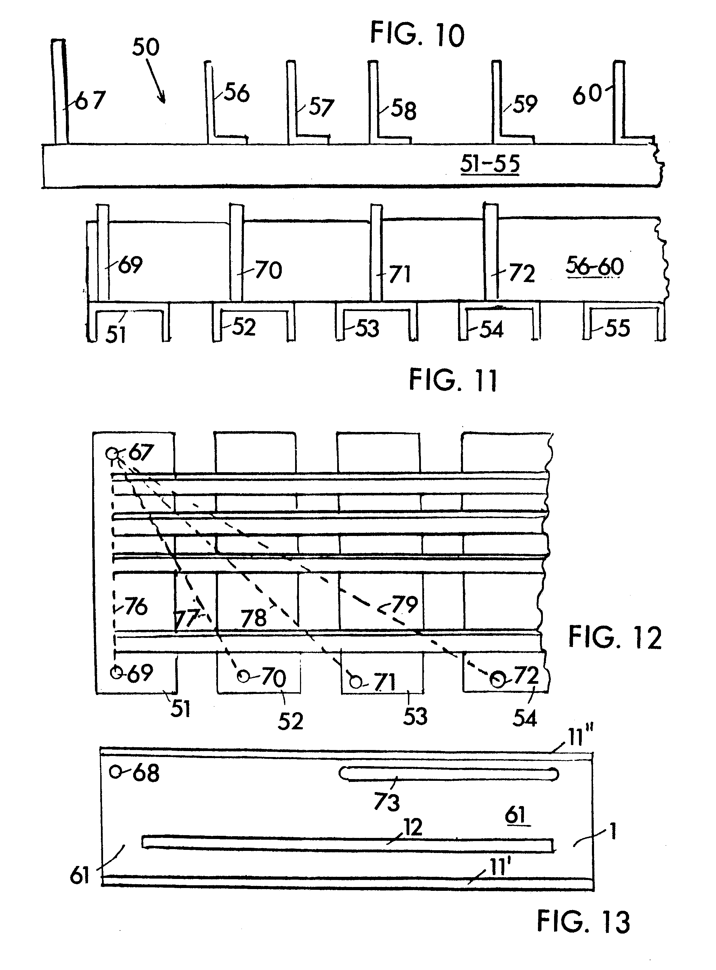

The positioning of the mitre table and the mitre ruler, in this embodiment, takes place by means of bolts or pins in one of the said means in cooperation with holes or one or more channels in the other means. Thus, a bolt 67 is attached to the channel beam 51, see Fig 12, and a hole 68, which as to its dimension is adapted to said bolt 67, is provided in the bottom 61 of the mitre ruler. Further, bolts or pins 69, 70, 71, 72 are attached to each of the channel beams 51, 52, 53 and 54, respectively. These bolts or pins 69, 70, 71 and 72 correspond to a groove 73 in the bottom of the mitre ruler. The groove 73 is shaped in such a way that the bolts 69 - 72 may be inserted into same. In order that the mitre ruler shall assume a position, perpendicular to the longitudinal direction of the mitre table when the bolt 67 is inserted into the hole 68, the bolt 69 should be inserted into the groove 73. This will give a mitre angle of 90°.

In a corresponding way, the bolts 70, 71 and 72 when introduced into the groove 73, represent mitre angles of 60°, 45° and 30°, as indicated by means of the lines 76, 77, 78 and 79 in Fig 12. Increased stability of the mitre ruler may be obtained by over bridging the groove 73 in ranges between the groove ranges, where the bolts 69-72 may enter. The parts of the groove 73, thereby emanating, may suitably be given an oval shape, limited by means of two straight edge lines, interconnected by semi-circular groove edges.

When mounting such a cable ditch in order of cutting it in a given mitre angle, the cable ditch is first placed over the mitre table, Figs 10 - 12, with its flange 31 attaching the edge of the border 56 at left in Fig 10, whereas the other flange 32 of the cable ditch attaches the right side of any one of the borders 57, 58, 59 or 60, dependent upon the size of the cable ditch. Thereafter, the mitre ruler is placed over the cable ditch, the bolt 67 passing into the hole 68, simultaneously as one chosen bolt amongst the bolts 69 - 72 is passed into the groove 73. The system thereafter is ready for execution of the cutting, which will take place by means of the saw device allready described above and shown in Figs 3 and 4.

By this arrangement comprising a number of parts separable from each other, it is easy to transport, but, in spite of this, the mounting work will not be difficult. By the exceedingly good and reliable guide action, one will avoid any tendency of oscillations of the saw blade, and, therefore, one will get perfect cut through the cable ditch with so even edges that the mitre joint will be practically fully tight and invisible.

## Claims

1. A mitre cutter device for cable ditches comprising a mitre ruler (Fig 2) to be clamped to the cable ditch (Fig 9) for receiving guide means for a saw apparatus (Figs 3 and 4) running along the mitre ruler, said apparatus when displaced being guided by guide means in combination with the mitre ruler, **characterized** by a mitre table (Fig 7) intended to carry the cable ditch in a given position and also, by means of the cable ditch, to carry the mitre ruler in a given position, the mitre table, the mitre ruler and the saw apparatus being made as separate parts which may be mutually combined by means by fastening means, the saw apparatus comprising a saw with rotational saw blade (17), which, when the saw apparatus is displaced along the mitre ruler, guided by the guide means will run in a groove (12) In the mitre ruler and also through the cable ditch applied under the mitre ruler in its active position.

2. A mitre cutter device according to claim 1, **characterized** thereby, that the mitre table is provided with a number of upwardly extending, parallel borders (36 - 39), the mutual distances of which being adapted to the standardized measures of the cable ditches, such that each cable ditch, when applied over the mitre table, will with its one flange (33) tightly contact one (35) of the borders and with its other flanges (34) contact some of the remaining borders (37 - 39).

3. A mitre cutter device according to claim 2, **characterized** thereby, that the saw apparatus is provided with guide wheels (20, 21), arranged to cooperate with longitudinal guide means (12, 11″) on the mitre ruler, at least two such lingitudinal guide means being provided, and at least two guide wheels (20) cooperating with one of them and at least two guide wheels (21) cooperating with the other one (11″) of them, in both cases so that in each of the pairs of guide wheels one will run in front of the saw apparatus and one will run behind same.

4. A mitre cutter device according to claim 3, **characterized** thereby, that one of the pairs of guide wheels are arranged to run in the groove (12) provided for the saw blade (17) in the bot tom (10) of the mitre ruler whereas the other pair of guide wheels will run on the edge of a longitudinal upwardly directed flange (11″) in the mitre ruler.

5. A mitre cutter device according to claim 4, **characterized** thereby, that the first mentioned pair of guide wheels running in the groove (12) in the mitre ruler is provided with a wheel ring (26) outside of the peripherial surface of the guide wheel, the width of said wheel ring being adapted to the width of the groove (12) in the bottom (10) of the mitre ruler.

6. A mitre cutter device according to claim 4 or 5, **characterized** thereby, that the last mentioned pair of guide wheels (21) running on the edge of the longitudinal upwardly directed flange (11″) of the mitre ruler is provided with a groove (25) in the cylindrical peripherial surface of the guide wheels, the width of said groove being adapted to the width of said flange (11″).

7. A mitre cutter device according to claim 5 or 6, **characterized** thereby, that the wheel ring (26) and/or the groove (25) of the guide wheels concerned (20, 21) have a parallel trapetzoidic profile.

8. A mitre cutter device according to any of the above claims, **characterized** thereby thst the mitre ruler is arranged to be clamped to the cable ditch and/or to the mitre table by means of releasable clamping means.

9. A mitre cutter device according to any of the claims 1 - 7, **characterized** thereby, that the mitre table (10) has such a large surface, that it will extend, along each if its longitudinal edges, outdide of the borders (56 - 60) attached to the table (10), and that bolts or holes (67, 69 - 72 and 73, respectively) are provided in the extending ranges for cooperation with holes or bolts, respectively, in the mitre ruler (61) the bolts and the holes, respectively, being so placed that, when the mitre ruler is placed over the mitre table in cooperation between selected bolts and holes, on the one side, and selected holes and bo ts, on the other side, will the mitre ruler assume a position relative to the mitre table and the cable ditch clamped thereto, representing a mitre angle of predeteremined magnitude, preferably 90°, 60°, 45° and/or 30°.

10. A mitre cutter device according to claim 9, **characaterized** thereby, that two or more holes are interconnected to form a longitudinal groove (73).

0269588

FIG. 1

FIG. 2

FIG. 4

FIG. 3

0269588

FIG. 5

FIG. 6

FIG. 7

FIG. 8

FIG. 9

FIG. 10

FIG. 11

FIG. 12

FIG. 13